# EUROPÄISCHE PATENTSCHRIFT

(11) **EP 0 904 309 B1**
(45) Veröffentlichungstag und Bekanntmachung des Hinweises auf die Patenterteilung: **31.10.2001**
(21) Anmeldenummer: 97925961.1
(22) Anmeldetag: 28.05.1997
(51) Int. Cl.: C08G 18/40, C08J 9/14

(54) **VERFAHREN ZUR HERSTELLUNG VON POLYURETHAN-HARTSCHAUMSTOFFEN MIT GERINGER WÄRMELEITFÄHIGKEIT**
PROCESS FOR PRODUCING HARD POLYURETHANE FOAMS WITH LOW HEAT CONDUCTIVITY
PROCEDE DE PRODUCTION DE MOUSSES DE POLYURETHANE RIGIDES A FAIBLE CONDUCTIBILITE THERMIQUE

(30) Priorität: 10.06.1996 DE 19623065
(43) Veröffentlichungstag der Anmeldung: 31.03.1999
(73) Patentinhaber: BAYER AG, 51368 Leverkusen (DE)
(72) Erfinder: McCULLOUGH, Dennis, D-51069 Köln (DE); HEINEMANN, Torsten, D-51065 Köln (DE); EISEN, Norbert, D-50937 Köln (DE); KLÄN, Walter, D-51373 Leverkusen (DE)
(86) Internationale Anmeldenummer: EP9702767
(87) Internationale Veröffentlichungsnummer: WO9747673

(56) Entgegenhaltungen:
- EP-A- 0 599 496
- EP-A- 0 617 068
- WO-A-94/03515
- US-A- 5 173 517
- CHEMICAL ABSTRACTS, vol. 119, no. 8, 23.August 1993 Columbus, Ohio, US; abstract no. 73906k, XP000405924 & JP 04 351 620 A (ACHILLES CORP.) 7.Dezember 1992

## Beschreibung

Die Erfindung betrifft ein neues Verfahren zur Herstellung von im wesentlichen geschlossenzelligen Polyurethan-Hartschaumstoffen.

Polyurethan-Hartschaumstoffe finden aufgrund ihrer geringen Wärmeleitfähigkeit Anwendung bei der Dämmung von Kühl- und Gefriergeräten, von industriellen Anlagen, Tanklagern, Rohrleitungen, im Schiffsbau sowie in der Bauindustrie. Eine zusammenfassende Übersicht über Herstellung von Polyurethan-Hartschaumstoffen und ihre Verwendung findet sich im Kunststoff-Handbuch, Band 7 (Polyurethane), 2. Auflage 1983, herausgegeben von Dr. Günter Oertel (Carl Hanser Verlag, München).

Die Wärmeleitfähigkeit eines weitgehend geschlossenzelligen Polyurethan-Hartschaumstoffes ist in starkem Maße abhängig von der Art des verwendeten Treibmittels bzw. Zellgases. Als besonders geeignet hatten sich hierfür die vollhalogenierten Fluorchlorkohlenwasserstoffe (FCKW) erwiesen, insbesondere Trichlorfluormethan (R11), welches eine besonders geringe Wärmeleitfähigkeit aufweist. Diese Stoffe sind chemisch inert und ungiftig. Vollhalogenierte Fluorchlorkohlenwasserstoffe gelangen jedoch infolge ihrer hohen Stabilität in die Stratosphäre, wo sie aufgrund ihres Gehaltes an Chlor zum Abbau des dort vorhandenen Ozons beitragen (z.B. Molina, Rowland, Nature 249 (1974) 810; Erster Zwischenbericht der Bundestags-Enquete-Kommision "Vorsorge zum Schutz der Erdatmosphäre vom 02.11.1988, Deutscher Bundestag, Referat Öffentlichkeitsarbeit, Bonn).

Um den R11-Gehalt in Polyurethan-Hartschaumstoffen zu reduzieren, wurden Formulierungen, die eine geringere R11-Konzentration enthalten, vorgeschlagen.

Weiter wurde vorgeschlagen (z.B. EP 344 537, US-PS 4 931 482), als Treibmittel teilfluorierte Kohlenwasserstoffe (Hydrofluoralkane), die noch mindestens eine Kohlenstoff-Wasserstoff-Bindung aufweisen, zu verwenden. Stoffe dieser Verbindungsklasse enthalten keine Chloratome und weisen infolgedessen einen ODP-Wert (Ozone Depletion Potential) von Null auf (zum Vergleich: R11: ODP = 1). Typische Vertreter dieser Substanzklasse sind z.B. 1,1,1,4,4,4-Hexafluorbutan (R356) oder 1,1,1,3,3-Pentafluorpropan (245fa).

Weiterhin ist bekannt, reine oder eine Mischung von Kohlenwasserstoffen (US 5 391 317) wie n- oder i-Pentan, 2,2-Dimethylbutan, Cyclopentan oder Cyclohexan als Treibmittel zu verwenden. Außerdem ist bekannt, Kohlenwasserstoffe in Verbindung mit Wasser als Treibmittel zu verwenden (EP 0 421 269).

Es ist weiter bekannt, daß unsubstituierte Kohlenwasserstoffe aufgrund ihres chemischen Aufbaus sehr unpolar sind und sich daher schlecht mit den für die Hartschaumstoffherstellung gebräuchlichen Polyolen mischen. Vollständige Mischbarkeit ist aber eine für die übliche Herstellungstechnik wichtige Voraussetzung, bei der die Polyol- und Isocyanatkomponenten maschinell verschäumt werden. Die Polyolkomponente enthält außer den reaktiven Polyether- oder Polyesterpolyolen auch Treibmittel und Hilfsstoffe wie Aktivatoren, Emulgatoren und Stabilisatoren in gelöster Form. Bekannt ist, daß Polyolformulierungen, die Aminopolyether enthalten, eine besonders hohe Alkanlöslichkeit aufweisen (WO 94/03515).

Bekannt ist auch, daß Kohlenwasserstoff-getriebene Hartschaumstoffe schlechtere Wärmeleitfähigkeiten als R-11- und R-11-reduziert-getriebene Hartschaumstoffe aufweisen, was durch die höheren Gaswärmeleitfähigkeiten der Kohlenwasserstoffe verursacht wird. (Wärmeleitfähigkeiten der Gase bei 20°C: R-11: 8 mW/mK; Cyclopentan: 10 mW/mK; n-Pentan, 13 mW/mK; i-Pentan, 13 mW/mK).

Aufgabe der vorliegenden Erfindung war es, Kohlenwasserstoff-getriebene Polyurethan-Hartschaumstoffe zur Verfügung zu stellen, die Wärmeleitfähigkeiten auf dem gleichen niedrigen Niveau wie die mit R11-reduziert getriebenen Schaumstoffe aufweisen.

Überraschenderweise wurde gefunden, daß Polyolformulierungen auf Basis einer bestimmten Polyolmischung Schaumstoffe mit Wärmeleitfähigkeiten liefern, die auf dem gleichen, niedrigen Niveau wie dem von mit R11-reduziert getriebenen Schaumstoffen liegen, insbesondere, wenn mit Cyclopentan als Treibmittel gearbeitet wird.

Gegenstand der Erfindung ist daher ein Verfahren zur Herstellung von Polyurethan-Hartschaumstoffen mit geringer Wärmeleitfähigkeit aus Polyolen und Polyisocyanaten sowie Treibmitteln und gegebenenfalls Schaumhilfsmitteln, dadurch gekennzeichnet, daß der Polyurethan Hartschaumstoff erhalten wird durch Umsetzung von
A. einer Polyolkomponente, enthaltend
   1. mindestens ein Polyesterpolyol vom Molekulargewicht 100 bis 30000 g/mol mit mindestens zwei gegenüber Isocyanaten reaktiven Wasserstoffatomen,
   2. mindestens zwei gegenüber Isocyanaten reaktive Wasserstoffatome aufweisenden Aminopolyether vom Molekulargewicht 150 bis 12.500 g/mol, die im Molekül mindestens ein tertiäres Stickstoffatom aufweisen,
   3. mindestens zwei gegenüber Isocyanaten reaktive Wasserstoffatome aufweisenden Polyether-Polyole vom Molekulargewicht 150 bis 12.500 g/mol, die erhalten werden durch Polyaddition von Alkylenoxiden an Wasser oder mehrwertige Alkohole,
   4. Katalysatoren,
   5. 0,5-7,0% Wasser, bezogen auf Gewicht der komponente A,
   6. Alkane und gemische von Alkanen,
   7. gegenbenenfalls Hilfs- und/oder Zusatzstoffen
   mit
B. einem organischen und/oder modifizierten organischen Polyisocyanat mit einem NCO-Gehalt von 20 bis 48 Gew.-%.

Es ist überraschend, daß erfindungsgemäß die Kombination eines Polyesterpolyols mit den angegebenen Aminopolyethern und einem weiteren Polyol in der Polyolkomponente Kohlenwasserstoff-getriebene Schaumstoffe mit einer derartig niedrigen Wärmeleitfähigkeit ergibt.

Erfindungsgemäße Polyolformulierungen enthalten mindestens ein Polyesterpolyol vom Molekulargewicht 100 bis 30000 g/mol, bevorzugt 150 bis 10000 g/mol, besonders bevorzugt 200 bis 600 g/mol aus aromatischen und/oder aliphatischen Mono-, Di- oder Tricarbonsäuren und mindestens 2 Hydroxylgruppen aufweisenden Polyolen. Beispiele für Dicarbonsäuren sind Phthalsäure, Fumarsäure, Maleinsäure, Azelainsäure, Glutarsäure, Adipinsäure, Korksäure, Terephthalsäure, Isophthalsäure, Decandicarbonsaure, Malonsäure, Glutarsäure, Bernsteinsäure und Fettsäuren wie Stearinsäure, Ölsäure, Rizinolsäure. Es können die reinen Mono-, Di- oder Tricarbonsäuren sowie beliebige Mischungen daraus verwendet werden. Anstelle der freien Mono-, Di- und Tricarbonsäuren können auch die entsprechenden Mono-, Di- und Tricarbonsäurederivate, wie z.B. Mono-, Di- und Tri- carbonsäureester von Alkoholen mit 1 bis 4 Kohlenstoffatomen oder Mono-, Di- und Tricarbonsäureanhydride oder Triglyceride eingesetzt werden. Als Alkoholkomponente zur Veresterung werden vorzugsweise verwendet: Ethylenglykol, Diethylenglykol, Triethylenglykol, Tetraethylenglykol, 1,2- bzw. 1,3-Propandiol, 1,4-Butandiol, 1,5-Pentandioi, 1,6-Hexandiol, 1,10-Decandiol, Glycerin, Trimethylolpropan, bzw. Mischungen daraus.

Polyolformulierungen können erfindungsgemäß auch Polyether-ester enthalten, wie sie z.B. durch Reaktion von Phthalsäureanhydrid mit Diethylenglykol und nachfolgend mit Ethylenoxid erhältlich sind (EP-A 0 250 967).

Erfindungsgemäße Polyolformulierungen enthalten mindestens eine, mindestens zwei gegenüber Isocyanaten reaktive Wasserstoffatome aufweisenden Verbindungen vom Molekulargewicht 150 bis 12.500 g/mol, vorzugsweise 200 bis 1500 g/mol, die im Molekül mindestens ein tertiäres Stickstoffatom aufweisen. Sie werden erhalten durch Polyaddition von Alkylenoxiden wie beispielsweise Ethylenoxid, Propylenoxid, Butylenoxid, Dodecyloxid oder Styroloxid, vorzugsweise Propylenoxid oder Ethylenoxid an Starterverbindungen. Als Starterverbindungen werden Ammoniak oder Verbindungen verwendet, die mindestens eine primäre oder sekundäre oder tertiäre Aminogruppe aufweisen, wie beispielsweise aliphatische Amine wie Ethylendiamin, Oligomere des Ethylendiamins (beispielsweise Diethylentriamin, Triethylenteramin oder Pentaethylenhexamin), Ethanolamin, Diethanolamin, Triethanolamin, N-Methyl- oder N-Ethyl-diethanolamin, 1,3-Propylendiamin, 1,3- bzw. 1,4-Butylendiamin, 1,2- 1,3-, 1,4-, 1,5-, 1,6-Hexamethylendiamin, aromatische Amine wie Phenylendiamine, Toluylendiamine (2,3-Toluylendiamin, 3,4-Toluylendiamin, 2,4-Toluylendiamin, 2,5-Toluylendiamin, 2,6-Toluylendiamin oder Gemische der genannten Isomeren), 2,2'-Diaminodiphenylmethan, 2,4'-Diaminodiphenylmethan, 4,4'- Diaminodiphenylmethan oder Gemische dieser Isomeren.

Erfindungsgemäße Polyolformulierungen enthalten weiterhin mindestens eine, mindestens zwei gegenüber Isocyanaten reaktive Wasserstoffatome aufweisende Verbindungen vom Molekulargewicht 150 bis 12.500 g/mol, vorzugsweise 200 bis 1500 g/mol. Sie werden erhalten durch Polyaddition von Alkylenoxiden wie beispielsweise Ethylenoxid, Propylenoxid, Butylenoxid, Dodecyloxid oder Styroloxid, vorzugsweise Propylenoxid oder Ethylenoxid an Starterverbindungen. Als Starterverbindungen werden Wasser und mehrwertige Alkohole wie Sucrose, Sorbitol, Pentaerythrit, Trimethylolpropan, Glycerin, Propylenglykol, Ethylenglykol, Diethylenglykol sowie Mischungen aus den genannten Starterverbindungen verwendet. Durch diese erfindungsgemäß mitzuverwendenden Polyole werden in vorteilhafter Weise die in der Praxis üblicherweise geforderten mechanischen Eigenschaften der Polyurethan-Hartschaumstoffe erreicht.

Erfindungsgemäße Polyolformulierungen enthalten einen Aktivator oder eine Aktivatormischung, die zu einer Abbindezeit von 20 bis 50 s, bevorzugt 25 bis 45 s, besonders bevorzugt 27 bis 40 s, führt, wenn die Verschäumung auf einer Hochdruckmaschine HK 270 der Fa. Hennecke bei 20°C erfolgt. Die Abbindezeit verstreicht vom Zeitpunkt der Vermischung bis zu dem Moment, von dem an ein in den Schaum eingeführter Stab beim Herausziehen Fäden zieht.

Erfindungsgemäß können die in der Polyurethanchemie üblichen Katalysatoren verwendet werden. Beispiele für derartige Katalysatoren sind: Triethylendiamin, N,N-Dimethylcyclohexylamin, Tetramethylendiamin, 1-Methyl-4-dimethylaminoethylpiperazin, Triethylamin, Tributylamin, Dimethylbenzylamin, N,N',N"-Tris(dimethylaminopropyl)-hexahydrotriazin, Dimethylaminopropylformamid, N,N,N',N'-Tetramethylethylendiamin, N,N,N',N'-Tetrametylbutandiamin, Tetrametylhexandiamin, Pentamethyldiethylentriamin, Tetramethyldiaminoethylether, Dimethylpiperazin, 1,2-Dimethylimidazol, 1-Aza-bicyclo-(3,3,0)-octan, Bis-(dimethylaminopropyl)-harnstoff, Bis-(dimethylaminopropyl)-ether, N-Methylmorpholin, N-Ethylmorpholin, N-Cyclohexylmorpholin, 2,3-Dimethyl-3,4,5,6,-tetrahydropyrimidin, Triethanolamin, Diethanolamine, Triisopropanolamin, N-Methyldiethanolamin, N-Ethyldiethanolamin, Dimethylethanolamin, Zinn-(II)-acetat, Zinn(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-dimethylaminopropyl)-s-hexahydrotriazin, Tetramethylammoniumhydroxid, Natriumacetat, Kaliumacetat, Natriumhydroxid, oder Gemische dieser oder ähnlicher Katalysatoren.

Erfindungsgemäße Polyolformulierungen enthalten 0,5 bis 7,0 Gew.-Teile, vorzugsweise 1,0 bis 3,0 Gew.-Teile Wasser pro 100 Gew.-Teile Polyolkomponente A.

Erfindungsgemäß werden Alkane wie Cyclohexan, Cyclopentan, i-Pentan, n-Pentan, n-Butan, Isobutan, 2,2-Dimethylbutan sowie Gemische der genannten Treibmittel verwendet.

Als Isocyanat-Komponente sind z. B. aromatische Polyisocyanate, wie sie z. B. von W. Siefken in Justus Liebigs Annalen der Chemie, 562, Seiten 75 bis 136, beschrieben werden, beispielsweise solche der Formel

Q(NCO)ₙ,

in der
- n: 2 bis 4, vorzugsweise 2, und
- Q: einen aliphatischen Kohlenwasserstoffrest mit 2 bis 18, vorzugsweise 6 bis 10, C-Atomen, einen cycloaliphatischen Kohlenwasserstoffrest mit 4 bis 15, vorzugsweise 5 bis 10, C-Atomen, einem aromatischen Kohlenwasserstoffrest mit 8 bis 15, vorzugsweise 8 bis 13, C-Atomen bedeuten, z. B. solche Polyisocyanate, wie sie in der DE-OS 28 32 253, Seiten 10 bis 11, beschrieben werden.

Besonders bevorzugt werden in der Regel die technisch leicht zugänglichen Polyisocyanate, z. B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate "modifizierte Polyisocyanate", insbesondere modifizierte Polyisocyanate, die sich vom 2,4- und 2,6-Toluylendiisocyanat bzw. vom 4,4'- und/oder 2,4'-Diphenylmethandiisocyanat ableiten.

Verwendet werden können auch Prepolymere aus den genannten Isocyanaten und organischen Verbindungen mit mindestens einer Hydroxylgruppe, wie beispielsweise 1-4 Hydroxylgruppen aufweisende Polyol- oder Polyesterkomponenten vom Molekulargewicht 60 - 1400 g/mol.

Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide, können mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl Hanser Verlag, München 1966, z. B. auf den Seiten 121 bis 205, und 2. Auflage 1983, herausgegeben von G. Oertel (Carl Hanser Verlag, München) beschrieben.

Bei der Schaumherstellung wird erfindungsgemß die Verschäumung in geschlossenen Formen durchgeführt. Dabei wird das Reaktionsgemisch in eine Form eingetragen. Als Formmaterial kommt Metall, z.B. Aluminium, oder Kunststoff, z.B. Epoxiharz, in Frage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine Kompakte Haut und einen zelligen Kern aufweist. Erfindungsgemäß geht man im erstgenannten Fall so vor, daß man in die Form so viel schäumfähiges Reaktionsgemisch einträgt, daß der gebildete Schaumstoff die Form gerade ausfüllt. Die Arbeitsweise im letztgenannten Fall besteht darin, daß man mehr schäumfähiges Reaktionsgemisch in die Form einträgt, als zur Ausfüllung des Forminneren mit Schaumstoff notwendig ist. Im letzteren Fall wird somit unter "overcharging" gearbeitet, eine derartige Verfahrensweise ist z.B. aus den US-PS 3 178 490 und 3 182 104 bekannt.

Gegenstand der Erfindung ist auch die Verwendung der erfindungsgemäß hergestellten Hartschaumstoffe als Zwischenschicht für Verbundelemente und zum Ausschäumen von Hohlräumen, insbesondere im Kühlmöbelbau.

Vorzugsweise wird das erfindungsgemäße Verfahren zur Ausschäumung von Hohlräumen von Kühl- und Gefriergeräten verwendet. Selbstverständlich können auch Schaumstoffe durch Blockverschäumung oder nach dem an sich bekannten Doppeltransportverfahren hergestellt werden.

Die nach der Erfindung erhältlichen Hartschaumstoffe finden Anwendung z.B. im Bauwesen sowie für die Dämmung von Fernwärmerohren und Containern.

Die folgenden Beispiele sollen die Erfindung erläutern, ohne sie jedoch in ihrem Umfang zu begrenzen.

In allen Beispielen wurden die Polyurethanhartschaumstoffe auf einer Hochdruckmaschine HK 270 der Fa. Hennecke bei 20°C hergestellt.

Die Abbindezeiten, die bei den einzelen Beispielen angegeben sind, wurden wie folgt bestimmt: Die Abbindezeit verstreicht vom Zeitpunkt der Vermischung bis zu dem Moment, wo ein in den Schaum eingeführter Stab beim Herausziehen Fäden zieht.
- Polyol A:: Polypropylenoxid-Polyether der Molmasse 600 auf Basis Sucrose/Glycerin
- Polyol B:: Polypropylenoxid-Polyether der Molmasse 1000 auf Basis Propylenglykol
- Polyol C:: Polypropylenoxid-Polyether der Molmasse 630 auf Basis Sucrose / Propylenglykol
- Polyol D:: Polypropylenoxid-Polyether der Molmasse 370 auf Basis Glycerin
- Polyol E:: Polypropylenoxid-Polyether der Molmasse 345 auf Basis Ethylendiamin
- Polyol F:: Polypropylenoxid-Polyether der Molmasse 440 auf Basis Trimethylolpropan
- Polyol G:: Polyether-ester der Molmasse 375 auf Basis von Phthalsäureanhydrid, Diethylenglykol und Ethylenoxid
- Polyol H:: Polypropylenoxid-Polyether der Molmasse 1120 auf Basis Triethanolamin
- Polyol I:: Polypropylenoxid-Polyether der Molmasse 560 auf Basis o-Toluylendiamin
- Polyol K:: Polypropylenoxid-Polyether der Molmasse 275 auf Basis Ethylendiamin

### Beispiel 1 (nicht erfindungsgemäß)

Rezeptur für Polyurethan-Hartschaumstoff

| Komponente A | |
|---|---|
| 80 Gew.-Teile | Polyol A |
| 20 Gew.-Teile | Polyol B |
| 3,5 Gew.-Teile | Wasser |
| 2,0 Gew.-Teile | Silikonstabilisator |
| 3,5 Gew.-Teile | Aktivatormischung, die aus Aktivator Desmorapid PV (Fa. Bayer AG), Aktivator Desmorapid 726b (Fa. Bayer AG) und Kaliumacetat (25%-ig) in Diethylenglykol besteht |

100 Gew.-Teile Komponente A werden mit 17 Gew.-Teilen CFC R-11 und 145 Gew.-Teilen rohem MDI (Desmodur 44V20, Fa. Bayer AG) bei 20°C gemischt und in einer geschlossenen Form auf 32 kg/m³ verdichtet.

### Beispiel 2 (nicht erfindungsgemäß)

Rezeptur für Polyurethan-Hartschaumstoff

| Komponente A | |
|---|---|
| 55 Gew.-Teile | Polyol C |
| 25 Gew.-Teile | Polyol D |
| 20 Gew.-Teile | Polyol E |
| 2,0 Gew.-Teile | Wasser |
| 2,0 Gew.-Teile | Silikonstabilisator |
| 2,0 Gew.-Teile | Aktivatormischung, die aus Aktivator Desmorapid PV (Fa. Bayer AG) und Aktivator Desmorapid 726b (Fa. Bayer AG) besteht |

100 Gew.-Teile Komponente A werden mit 12 Gew.-Teilen Cyclopentan (Fa. Erdölchemie) und 151 Gew.-Teilen rohem MDI (Desmodur 44V20, Fa. Bayer AG) bei 20°C gemischt und in einer geschlossenen Form auf 38 kg/m³ verdichtet.

### Beispiel 3 (nicht erfindungsgemäß)

Rezeptur für Polyurethan-Hartschaumstoff

| Komponente A | |
|---|---|
| 50 Gew.-Teile | Polyol A |
| 40 Gew.-Teile | Polyol F |
| 10 Gew.-Teile | Polyol G |
| 2,0 Gew.-Teile | Wasser |
| 2,0 Gew.-Teile | Silikonstabilisator |
| 2,5 Gew.-Teile | Aktivatormischung, die aus Aktivator Desmorapid PV (Fa. Bayer AG) und Aktivator Desmorapid 726b (Fa. Bayer AG) besteht |

100 Gew.-Teile Komponente A werden mit 13 Gew.-Teilen Cyclopentan (Fa. Erdölchemie) und 148 Gew.-Teilen rohem MDI (Desmodur 44V20, Fa. Bayer AG) bei 20°C gemischt und in einer geschlossenen Form auf 38 kg/m³ verdichtet.

### Beispiel 4 (nicht erfindungsgemäß)

Rezeptur für Polyurethan-Hartschaumstoff

| Komponente A | |
|---|---|
| 50 Gew.-Teile | Polyol C |
| 25 Gew.-Teile | Polyol E |
| 25 Gew.-Teile | Polyol H |
| 2,2 Gew.-Teile | Wasser |
| 2,0 Gew.-Teile | Silikonstabilisator |
| 1,5 Gew.-Teile | Aktivatormischung, die aus Aktivator Desmorapid PV (Fa. Bayer AG) und Aktivator Desmorapid 726b (Fa. Bayer AG) besteht |

100 Gew.-Teile Komponente A werden mit 11 Gew.-Teilen i,n-Pentan (8:3) und 142 Gew.-Teilen rohem MDI (Desmodur 44V20, Fa. Bayer AG) bei 20°C gemischt und in einer geschlossenen Form auf 36 kg/m³ verdichtet.

### Beispiel 5 (nicht erfindungsgemäß)

Rezeptur für Polyurethan-Hartschaumstoff

| Komponente A | |
|---|---|
| 55 Gew.-Teile | Polyol C |
| 20 Gew.-Teile | Polyol D |
| 25 Gew.-Teile | Polyesterpolyol Stepanpol® 2352 (Fa. Stepan) |
| 2,1 Gew.-Teile | Wasser |
| 2,0 Gew.-Teile | Silikonstabilisator |
| 1,5 Gew.-Teile | Aktivatormischung, die aus Aktivator Desmorapid PV (Fa. Bayer AG) und Aktivator Desmorapid 726b (Fa. Bayer AG) besteht |

100 Gew.-Teile Komponente A werden mit 12 Gew.-Teilen Cyclopentan (Fa. Erdölchemie) gemischt. Die Mischung (Komponente A + Cyclopentan) wird trübe und separiert sofort.

### Beispiel 6 (nicht erfindungsgemäß)

Rezeptur für Polyurethan-Hartschaumstoff

| Komponente A | |
|---|---|
| 55 Gew.-Teile | Polyol C |
| 20 Gew.-Teile | Polyol D |
| 25 Gew.-Teile | Polyesterpolyol Stepanpol® 2352 (Fa. Stepan) |
| 2,3 Gew.-Teile | Wasser |
| 2,0 Gew.-Teile | Silikonstabilisator |
| 1,5 Gew.-Teile | Aktivatormischung, die aus Aktivator Desmorapid PV (Fa. Bayer AG) und Aktivator Desmorapid 726b (Fa. Bayer AG) besteht |

100 Gew.-Teile Komponente A werden mit 11 Gew.-Teilen i,n-Pentan (3:8) gemischt. Die Mischung (Komponente A + i,n-Pentan) wird trübe und separiert sofort.

### Beispiel 7 (erfindungsgemäß)

Rezeptur für Polyurethan-Hartschaumstoff

| Komponente A | |
|---|---|
| 40 Gew.-Teile | Polyol C |
| 20 Gew.-Teile | Polyol I |
| 15 Gew.-Teile | Polyol K |
| 25 Gew.-Teile | Polyesterpolyol Stepanpol® 2352 (Fa. Stepan) |
| 2,4 Gew.-Teile | Wasser |
| 2,0 Gew.-Teile | Silikonstabilisator |
| 1,4 Gew.-Teile | Aktivator Desmorapid PV (Fa. Bayer AG) |
| 0,4 Gew.-Teile | Aktivator N,N',N"-Tris-(dimethylaminopropyl)-hexahydrotriazin |

100 Gew.-Teile Komponente A werden mit 15 Gew.-Teilen Cyclopentan (Fa. Erdölchemie) und 161 Gew.-Teilen rohem MDI (Desmodur 44V20, Fa. Bayer AG) bei 20°C gemischt und in einer geschlossenen Form auf 34 kg/m³ verdichtet.

### Beispiel 8 (erfindungsgemäß)

Rezeptur für Polyurethan-Hartschaumstoff

| Komponente A | |
|---|---|
| 20 Gew.-Teile | Polyol C |
| 40 Gew.-Teile | Polyol I |
| 15 Gew.-Teile | Polyol K |
| 25 Gew.-Teile | Polyesterpolyol Stepanpol® 2352 (Fa. Stepan) |
| 2,4 Gew.-Teile | Wasser |
| 2,0 Gew.-Teile | Silikonstabilisator |
| 1,4 Gew.-Teile | Aktivator Desmorapid PV (Fa. Bayer AG) |
| 0,4 Gew.-Teile | Aktivator N,N',N" -Tris-(dimethylaminopropyl)-hexahydrotriazin |

100 Gew.-Teile Komponente A werden mit 15 Gew.-Teilen Cyclopentan (Fa. Erdölchemie) und 157 Gew.-Teilen rohem MDI (Desmodur 44V20, Fa. Bayer AG) bei 20°C gemischt und in einer geschlossenen Form auf 34 kg/m³ verdichtet.

### Beispiel 9 (erfindungsgemäß)

Rezeptur für Polyurethan-Hartschaumstoff

| Komponente A | |
|---|---|
| 10 Gew.-Teile | Polyol C |
| 50 Gew.-Teile | Polyol I |
| 15 Gew.-Teile | Polyol K |
| 25 Gew.-Teile | Polyesterpolyol Stepanpol® 2352 (Fa. Stepan) |
| 2,4 Gew.-Teile | Wasser |
| 2,0 Gew.-Teile | Silikonstabilisator |
| 0,5 Gew.-Teile | Aktivator Desmorapid PV (Fa. Bayer AG) |
| 0,5 Gew.-Teile | Aktivator Dimethylaminopropylformamid |
| 0,4 Gew.-Teile | Aktivator N,N',N"-Tris-(dimethylaminopropyl)-hexahydrotriazin |

100 Gew.-Teile Komponente A werden mit 17 Gew.-Teilen Cyclopentan (Fa. Erdölchemie) und 170 Gew.-Teilen MDI Prepolymer (E577, Fa. Bayer Corporation) bei 20°C gemischt und in einer geschlossenen Form auf 36 kg/m³ verdichtet.

### Beispiel 10 (erfindungsgemäß)

Rezeptur für Polyurethan-Hartschaumstoff

| Komponente A | |
|---|---|
| 40 Gew.-Teile | Polyol C |
| 10 Gew.-Teile | Polyol G |
| 50 Gew.-Teile | Polyol I |
| 2,5 Gew.-Teile | Wasser |
| 2,0 Gew.-Teile | Silikonstabilisator |
| 0,5 Gew.-Teile | Aktivator Desmorapid PV (Fa. Bayer AG) |
| 1,6 Gew.-Teile | Aktivator Desmorapid 726b (Fa. Bayer AG) |

100 Gew.-Teile Komponente A werden mit 13 Gew.-Teilen Cyclopentan (Fa. Erdölchemie) und 135 Gew.-Teilen rohem MDI (Desmodur 44V20, Fa. Bayer AG) bei 20°C gemischt und in einer geschlossenen Form auf 35 kg/m³ verdichtet.

### Beispiel 11 (erfindungsgemäß)

Rezeptur für Polyurethan-Hartschaumstoff

| Komponente A | |
|---|---|
| 20 Gew.-Teile | Polyol C |
| 45 Gew.-Teile | Polyol I |
| 15 Gew.-Teile | Polyol K |
| 20 Gew.-Teile | Polyesterpolyol Stepanpol® 2352 (Fa. Stepan) |
| 2,4 Gew.-Teile | Wasser |
| 2,0 Gew.-Teile | Silikonstabilisator |
| 1,2 Gew.-Teile | Aktivator Desmorapid PV (Fa. Bayer AG) |
| 0,4 Gew.-Teile | Aktivator N,N',N"-Tris-(dimethylaminopropyl)-hexahydrotriazin |

100 Gew.-Teile Komponente A werden mit 13 Gew.-Teilen i,n-Pentan (3:8) und 151 Gew.-Teilen rohem MDI (Desmodur 44V20, Fa. Bayer AG) bei 20°C gemischt und in einer geschlossenen Form auf 35 kg/m³ verdichtet.

Von den in den Beispielen 1 bis 11 hergestellten Schaurnstoffplatten wurden die in der Tabelle dargelegten Prüfwerte erhalten.

| Beispiel | Phasenstabilität von Treibmittel-enthaltenen Komponente A | Abbindezeit des Schaumstoffes (s) | Wärmeleitzahl (mW/mK) gemäß DIN 52616, 24 °C |
|---|---|---|---|
| 1 | Klare, stabile Mischung | 50 | 19,6 |
| 2 | Klare, stabile Mischung | 50 | 21,5 |
| 3 | Klare, stabile Mischung | 29 | 21,6 |
| 4 | Klare, stabile Mischung | 50 | 23,7 |
| 5 | Trübe, separierte Mischung | -- | -- |
| 6 | Trübe, separierte Mischung | -- | -- |
| 7 | Klare, stabile Mischung | 25 | 19,9 |
| 8 | Klare, stabile Mischung | 25 | 19,7 |
| 9 | Klare, stabile Mischung | 31 | 19,9 |
| 10 | Klare, stabile Mischung | 27 | 19,9 |
| 11 | Klare, stabile Mischung | 28 | 22,0 |

Beispiel 1 zeigt ein typisches Ergebnis von einem R-11 reduzierten System.

Beispiele 2 und 3 sind dem Stand der Technik entsprechende Cyclopentangetriebene Systeme, die normale Wärmeleitzahlen aufweisen.

Obwohl Beispiele 3 einen Polyester-Polyether und eine erfindungsgemäße Aktivatormischung, die zur Einstellung einer Abbindezeit von 29 s führt, enthalten, wird eine normale Wärmeleitzahl gefunden.

Beispiel 4 ist ein dem Stand der Technik entsprechendes i,n-Pentan getriebenes System.

Beispiele 5 und 6 enthalten keine amingestarteten Polyole; daher ist die Polyolformulierung nicht phasenstabil bezüglich Cyclopentan und kann mit üblicher Technik nicht verschäumt werden.

Die Beispiele 7 bis 10 zeigen, daß nach dem erfindungsgemäßen Verfahren mit Cyclopentan als Treibmittel Schaumstoffe mit auf dem gleichen, niedrigen Niveau wie auf dem von R11 reduziert-getriebenen Schaumstoffen liegende Wärmeleitfähigkeiten erhalten werden.

Beispiele 11 zeigt, daß nach dem erfindungsgemäßen Verfahren auch mit i,n-Pentan als Treibmittel Schaumstoffe mit niedrigen Wärmeleitfähigkeiten erhalten werden.

## Patentansprüche

1. Verfahren zur Herstellung von Polyurethan Hartschaumstoffen mit geringer Wärmeleitfähigkeit aus Polyolen und Polyisocyanaten sowie Treibmitteln und gegebenenfalls Schaumhilfsmitteln, **dadurch gekennzeichnet, daß** der Polyurethan Hartschaumstoff erhalten wird durch Umsetzung von
A. einer Polyolkomponente, enthaltend
1. mindestens ein Polyesterpolyol vom Molekulargewicht 100 bis 30000 g/mol mit mindestens zwei gegenüber Isocyanaten reaktiven Wasserstoffatomen,
2. mindestens zwei gegenüber Isocyanaten reaktive Wasserstoffatome sowie mindestens ein tertiäres Stickstoffatom aufweisende Aminopolyether vom Molekulargewicht 150 bis 12.500 g/mol,
3. mindestens zwei gegenüber Isocyanaten reaktive Wasserstoffatome aufweisenden Polyether, Polyole vom Molekulargewicht 150 bis 12.500 g/mol, die erhalten werden durch Polyaddition von Alkylenoxiden an Wasser oder mehrwertige Alkohole,
4. Katalysatoren,
5. 0,5-7,0% Wasser, bezogen auf Gewicht des komponente A,
6. Alkane und Gemische von Alkanen,
7. gegenbenenfalls Hilfs- und/oder Zusatzstoffe
mit
B. einem organischen und/oder modifizierten organischen Polyisocyanat mit einem NCO-Gehalt von 20 bis 48 Gew.-%.

2. Verfahren zur Herstellung von Polyurethan Hartschaumstoffen gemäß Anspruch 1, **dadurch gekennzeichnet, daß** als Polyesterpolyol (1) ein Polyester vom Molekulargewicht 100 bis 30.000 g/mol aus aromatischen und/oder aliphatischen Mono-, Di- und Tricarbonsäuren und mindestens 2 Hydroxylgruppen aufweisenden Polyolen verwendet wird.

3. Verfahren zur Herstellung. von Polyurethan Hartschaumstoffen gemäß Anspruch 1 oder 2, **dadurch gekennzeichnet, daß** als Komponente (2) ein o-Toluylendiamin gestarteter Aminopolyether auf Basis von 70 bis 100 Gew.-% 1,2-Propylenoxid und 0 bis 30 Gew.-% Ethylenoxid verwendet wird.

4. Verfahren zur Herstellung von Polyurethan Hartschaumstoffen gemäß Anspruch 1, **dadurch gekennzeichnet, daß** als Komponente (2) ein Ethylendiamin gestarteter Polyether auf Basis von 50 bis 100 Gew.-% 1,2-Propylenoxid und 0 bis 50 Gew.-% Ethylenoxid verwendet wird

5. Verfahren zur Herstellung von Polyurethan Hartschaumstoffen gemäß Anspruch 1, **dadurch gekennzeichnet, daß** als Komponente (2) ein Triethanolamin gestarteter Polyether auf Basis von 50 bis 100 Gew.-% 1,2-Propylenoxid und 0 bis 50 Gew.-% Ethylenoxid verwendet wird.

6. Verfahren zur Herstellung von Polyurethan Hartschaumstoffen gemäß Anspruch 1, **dadurch gekennzeichnet, daß** Komponente (3) einen Sucrose gestarteten Polyether auf Basis von 70 bis 100 Gew.-% 1,2-Propylenoxid und 0 bis 30 Gew.-% Ethylenoxid enthält.

7. Verfahren zur Herstellung von Polyurethan Hartschaumstoffen gemäß Anspruch 1, **dadurch gekennzeichnet, daß** Komponente (3) einen Sorbitol gestarteten Polyether auf Basis von 70 bis 100 Gew.-% 1,2-Propylenoxid und 0 bis 30 Gew.-% Ethylenoxid enthält

8. Verfahren zur Herstellung von Polyurethan Hartschaumstoffen gemäß Anspruch 1, **dadurch gekennzeichnet, daß** Komponente (3) einen Trimethylolpropan gestarteten Polyether auf Basis von 70 bis 100 Gew.-% 1,2-Propylenoxid und 0 bis 30 Gew.-% Ethylenoxid enthalt.

9. Verfahren zur Herstellung von Polyurethan Hartschaumstoffen gemäß Anspruch 1, **dadurch gekennzeichnet, daß** als Komponente (3) einen Glycerin gestarteten Polyether auf Basis von 70 bis 100 Gew.-% 1,2-Propylenoxid und 0 bis 30 Gew.-% Ethylenoxid enthält.

10. Verfahren zur Herstellung von Polyurethan Hartschaumstoffen gemäß Anspruch 1, **dadurch gekennzeichnet, daß** als Treibmittel (6) Cyclopentan oder n- und/oder i-Pentan verwendet wird.

11. Verfahren zur Herstellung von Polyurethan Hartschaumstoffen gemäß Anspruch 1, **dadurch gekennzeichnet, daß** als Treibmittel (6) Gemische aus c-Pentan und/oder n-Butan und/oder Isobutan und/oder 2,2-Dimethylbutan verwendet wird.

12. Verfahren zur Herstellung von Polyurethan Hartschaumstoffen gemäß Anspruch 1, **dadurch gekennzeichnet, daß** als Treibmittel (6) Gemische aus n- und/oder i-Pentan und/oder Cyclopentan und/oder Cyclohexan verwendet wird.

13. Verwendung der gemäß einem der Ansprüche 1 bis 13 erhaltenen Polyurethan Hartschaumstoffe als Zwischenschicht fur Verbundelemente oder zum Ausschäumen von Hohlräumen.

## Claims

1. Process for the production of rigid polyurethane foams having low thermal conductivity from polyols and polyisocyanates together with blowing agents and optionally foam auxiliaries, **characterised in that** the rigid polyurethane foam is obtained by reacting
A. a polyol component containing
1. at least one polyester polyol of a molecular weight of 100 to 30000 g/mol having at least two isocyanate-reactive hydrogen atoms,
2. aminopolyethers of a molecular weight from 150 to 12500 g/mol containing at least two isocyanate-reactive hydrogen atoms together with at least one tertiary nitrogen atom,
3. polyether polyols of a molecular weight from 150 to 12500 g/mol containing at least two isocyanate-reactive hydrogen atoms, which polyols are obtained by polyaddition of alkylene oxides onto water or polyhydric alcohols,
4. catalysts,
5. 0.5-7.0% water, relative to the weight of component A,
6. alkanes and mixtures of alkanes,
7. optionally auxiliary substances and/or additives
with
B. an organic and/or modified organic polyisocyanate having an NCO content of 20 to 48 wt.%.

2. Process for the production of rigid polyurethane foams according to claim 1, **characterised in that** the polyester polyol (1) used is a polyester of a molecular weight of 100 to 30000 g/mol prepared from aromatic and/or aliphatic mono-, di- and tricarboxylic acids and polyols containing at least two hydroxyl groups.

3. Process for the production of rigid polyurethane foams according to claim 1 or 2, **characterised in that** the component (2) used is an o-tolylenediamine-started aminopolyether based on 70 to 100 wt.% of 1,2-propylene oxide and 0 to 30 wt.% of ethylene oxide.

4. Process for the production of rigid polyurethane foams according to claim 1, **characterised in that** the component (2) used is an ethylenediamine-started polyether based on 50 to 100 wt.% of 1,2-propylene oxide and 0 to 50 wt.% of ethylene oxide.

5. Process for the production of rigid polyurethane foams according to claim 1, **characterised in that** the component (2) used is a triethanolamine-started polyether based on 50 to 100 wt.% of 1,2-propylene oxide and 0 to 50 wt.% of ethylene oxide.

6. Process for the production of rigid polyurethane foams according to claim 1, **characterised in that** component (3) contains a sucrose-started polyether based on 70 to 100 wt.% of 1,2-propylene oxide and 0 to 30 wt.% of ethylene oxide.

7. Process for the production of rigid polyurethane foams according to claim 1, **characterised in that** component (3) contains a sorbitol-started polyether based on 70 to 100 wt.% of 1,2-propylene oxide and 0 to 30 wt.% of ethylene oxide.

8. Process for the production of rigid polyurethane foams according to claim 1, **characterised in that** component (3) contains a trimethylolpropane-started polyether based on 70 to 100 wt.% of 1,2-propylene oxide and 0 to 30 wt.% of ethylene oxide.

9. Process for the production of rigid polyurethane foams according to claim 1, **characterised in that** component (3) contains a glycerol-started polyether based on 70 to 100 wt.% of 1,2-propylene oxide and 0 to 30 wt.% of ethylene oxide.

10. Process for the production of rigid polyurethane foams according to claim 1, **characterised in that** the blowing agent (6) used is cyclopentane or n- and/or i-pentane.

11. Process for the production of rigid polyurethane foams according to claim 1, **characterised in that** the blowing agent (6) used comprises mixtures of c-pentane and/or n-butane and/or isobutane and/or 2,2-dimethylbutane.

12. Process for the production of rigid polyurethane foams according to claim 1, **characterised in that** the blowing agent (6) used comprises mixtures of n- and/or i-pentane and/or cyclopentane and/or cyclohexane.

13. Use of the rigid polyurethane foams obtained according to one of claims 1 to 13 as an interlayer for composite components or for filling cavities.

## Revendications

1. Procédé pour la préparation de mousses rigides de polyuréthanne à basse conductibilité thermique à partir de polyols, de polyisocyanates et d'agents porogènes et le cas échéant de produits auxiliaires de gonflement, **caractérisé en ce que** la mousse rigide de polyuréthanne est obtenue par réaction de
A. un composant polyol contenant
1. au moins un polyester-polyol de poids moléculaire 100 à 30 000 g/mol, contenant au moins deux atomes d'hydrogène réactifs à l'égard des isocyanates,
2. des aminopolyéthers de poids moléculaire 150 à 12 500 g/mol, contenant au moins deux atomes d'hydrogène réactifs à l'égard des isocyanates et au moins un atome d'azote tertiaire,
3. des polyéther-polyols de poids moléculaire 150 à 12 500 g/mol, contenant au moins deux atomes d'hydrogène réactifs à l'égard des isocyanates et qui ont été obtenus par polyaddition d'oxydes d'alkylène sur l'eau ou des alcools polyvalents,
4. des catalyseurs,
5. 0,5 à 7,0 % d'eau par rapport au poids du composant A,
6. des alcanes et mélanges d'alcanes,
7. le cas échéant des produits auxiliaires et/ou additifs,
avec
B. un polyisocyanate organique et/ou un polyisocyanate organique modifié à une teneur en NCO de 20 à 48 % en poids.

2. Procédé pour la préparation de mousses rigides de polyuréthannes selon la revendication 1, **caractérisé en ce que** l'on utilise en tant que polyester-polyol (1) un polyester de poids moléculaire 100 à 30 000 g/mol d'acides mono-, di- et tri-carboxyliques aromatiques et/ou aliphatiques et de polyols à au moins deux groupes hydroxy.

3. Procédé pour la préparation de mousses rigides de polyuréthannes selon la revendication 1 ou 2, **caractérisé en ce que** l'on utilise en tant que composant (2) un aminopolyéther condensé sur une mole de départ d'o-toluylènediamine, à base de 70 à 100 % en poids d'oxyde de 1,2-propylène et de 0 à 30 % en poids d'oxyde d'éthylène.

4. Procédé pour la préparation de mousses rigides de polyuréthannes selon la revendication 1, **caractérisé en ce que** l'on utilise en tant que composant (2) un polyéther condensé sur une mole de départ d'éthylènediamine, à base de 50 à 100 % en poids d'oxyde de 1,2-propylène et de 0 à 50 % en poids d'oxyde d'éthylène.

5. Procédé pour la préparation de mousses rigides de polyuréthannes selon la revendication 1, **caractérisé en ce que** l'on utilise en tant que composant (2) un polyéther condensé sur une mole de départ de triéthanolamine, à base de 50 à 100 % en poids d'oxyde de 1,2-propylène et de 0 à 50 % en poids d'oxyde d'éthylène.

6. Procédé pour la préparation de mousses rigides de polyuréthannes selon la revendication 1, **caractérisé en ce que** l'on utilise en tant que composant (3) un polyéther condensé sur une mole de départ de saccharose, à base de 70 à 100 % en poids d'oxyde de 1,2-propylène et de 0 à 30 % en poids d'oxyde d'éthylène.

7. Procédé pour la préparation de mousses rigides de polyuréthannes selon la revendication 1, **caractérisé en ce que** l'on utilise en tant que composant (3) un polyéther condensé sur une mole de départ de sorbitol, à base de 70 à 100 % en poids d'oxyde de 1,2-propylène et de 0 à 30 % en poids d'oxyde d'éthylène.

8. Procédé pour la préparation de mousses rigides de polyuréthannes selon la revendication 1, **caractérisé en ce que** l'on utilise en tant que composant (3) un polyéther condensé sur une mole de départ de triméthylolpropane, à base de 70 à 100 % en poids d'oxyde de 1,2-propylène et de 0 à 30 % en poids d'oxyde d'éthylène.

9. Procédé pour la préparation de mousses rigides de polyuréthannes selon la revendication 1, **caractérisé en ce que** l'on utilise en tant que composant (3) un polyéther condensé sur une mole de départ de glycérol, à base de 70 à 100 % en poids d'oxyde de 1,2-propylène et de 0 à 30 % en poids d'oxyde d'éthylène.

10. Procédé pour la préparation de mousses rigides de polyuréthannes selon la revendication 1, **caractérisé en ce que** l'on utilise en tant qu'agent porogène (6) le cyclopentane ou le n- et/ou l'iso-pentane.

11. Procédé pour la préparation de mousses rigides de polyuréthannes selon la revendication 1, **caractérisé en ce que** l'on utilise en tant qu'agents porogènes (6) des mélanges de c-pentane et/ou de n-butane et/ou d'isobutane, et/ou de 2,2-diméthylbutane.

12. Procédé pour la préparation de mousses rigides de polyuréthannes selon la revendication 1, **caractérisé en ce que** l'on utilise en tant qu'agents porogènes (6) des mélanges de n- et/ou d'iso-pentanes et/ou de cyclopentane et/ou de cyclohexane.

13. Utilisation des mousses rigides de polyuréthannes obtenues selon une des revendications 1 à 13 en couches intermédiaires d'éléments composites ou pour la garniture en mousse d'espaces creux.
